# EUROPEAN PATENT APPLICATION

(11) **EP 4 265 856 A1**
(43) Date of publication of application: **25.10.2023**
(21) Application number: 21906726.1
(22) Date of filing: 17.12.2021
(51) Int. Cl.: E02F 9/20, F02D 29/00, F02D 29/02

(54) **CONSTRUCTION MACHINE**

(30) Priority: 18.12.2020 JP 2020210239
(71) Applicant: Yanmar Holdings Co., Ltd., Osaka-shi, Osaka, 530-0013 (JP)
(72) Inventor: DEGUCHI Takashi, Chikugo-shi, Fukuoka 833-0055 (JP); KAWAGUCHI Daisuke, Chikugo-shi, Fukuoka 833-0055 (JP)
(74) Representative: Novagraaf International SA
(86) International application number: PCT/JP2021/046794
(87) International publication number: WO 2022/131368

(57) **Abstract**

A construction machine (100) comprises a measurement unit (26), a storage unit (24), and a notification unit (12). The measurement unit (26) measures the number of times of drive of a starter (520). The storage unit (24) stores the number of times of drive measured by the measurement unit (26) and a reference value. The notification unit (12) executes a notification process for providing notification of the drive status of the starter (520) on the basis of the number of times of drive and the reference value. Preferably, the construction machine (100) further comprises a comparison unit (221) that compares the number of times of drive and the reference value. Preferably, the notification unit (12) provides, in the notification process, notification of the result of the comparison by the comparison unit (221).

## Description

### TECHNICAL FIELD

The present invention relates to a construction machine.

### BACKGROUND ART

A construction machine having an automatic engine stop function is known (e.g., Patent Literature 1) The construction machine described in Patent Literature 1 automatically stops an engine on the condition that an operator disembarks.

### CITATION LIST

### Patent Literature

Patent Literature 1: Japanese Patent No. 4089270

### DISCLOSURE OF INVENTION

### PROBLEMS TO BE SOLVED BY THE INVENTION

However, the construction machine described in Patent Literature 1, compared with a construction machine without an automatic engine stop function, increases the number of drives of a starter, resulting in an excessive wear of the starter. As a result, the excessive wear of the starter may cause an engine start failure.

The present invention has been made in view of the above problem; it is therefore an object of the present invention to provide a construction machine capable of suppressing a possibility of causing an engine start failure.

### MEANS FOR SOLVING THE PROBLEMS

According to an aspect of the present invention, a construction machine includes: a measurement unit, a storage unit, and a notification unit. The measurement unit measures the number of drives of a starter. The storage unit stores the number of drives measured by the measurement unit, and a reference value. The notification unit notifies about a drive state of the starter based on the number of drives and on the reference value.

According to another aspect of the present invention, a construction machine includes: a measurement unit, a storage unit, and a control unit. The measurement unit measures the number of drives of a starter. The storage unit stores the number of drives measured by the measurement unit, and a reference value. The control unit executes an automatic engine stop control based on the number of drives and on the reference value.

### EFFECT OF THE INVENTION

The present invention can suppress a possibility of causing an engine start failure.

### BRIEF DESCRIPTION OF DRAWINGS

FIG. 1 is a block diagram showing a construction machine according to a first embodiment of the present invention.
FIGS. 2(a) and 2(b) illustrate an automatic engine stop function.
FIG. 3 is a flowchart showing an example of an automatic engine stop control process by a control unit according to a first embodiment of the present invention.
FIG. 4 is a flowchart showing another example of the automatic engine stop control process by the control unit according to the first embodiment of the present invention.
FIG. 5 shows a display screen.
FIG. 6 shows a setting screen.
FIG. 7 is a flowchart showing an example of the automatic engine stop control process which accords to a setting operation by the control unit according to the first embodiment of the present invention.
FIG. 8 is a flowchart showing another example of the automatic engine stop control process which accords to the setting operation by the control unit according to the first embodiment of the present invention.
FIG. 9 shows the display screen.
FIG. 10 is a block diagram showing the construction machine according to a second embodiment of the present invention.

### DESCRIPTION OF EMBODIMENTS

An embodiment of the present invention will be described hereinafter with reference to the accompanying drawings. It is noted that in the drawings, the same or corresponding parts are denoted by the same reference numerals or signs, and will not be repeatedly described.

### [First Embodiment]

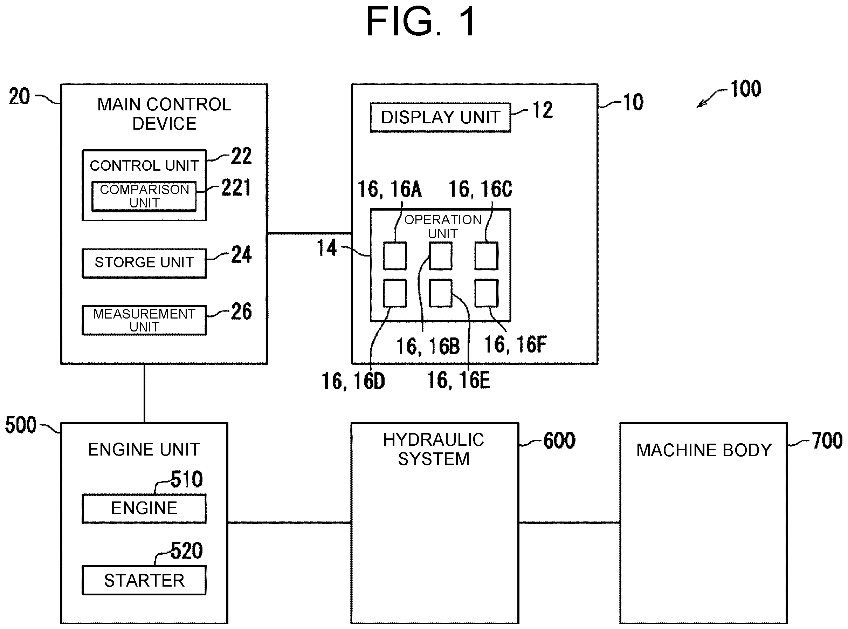

Referring to FIG. 1, a construction machine 100 according to a first embodiment of the present invention is described. FIG. 1 is a block diagram showing a construction machine 100 according to the first embodiment of the present invention.

As shown in FIG. 1, the construction machine 100 has a display device 10, a main control device 20, an engine unit 500, a hydraulic system 600, and a machine body 700. The hydraulic system 600 includes, for example, a hydraulic pump and a hydraulic circuit. Further, the machine body 700 includes a run body and a work machine. In the above construction machine 100, the hydraulic system 600, by the power generated by the engine unit 500, supplies a hydraulic oil to the machine body 700. As a result, the run body and work machine of the machine body 700 operate. The construction machine 100 is, for example, a hydraulic excavator.

The display device 10 is provided with a display unit 12 and an operation unit 14.

The display unit 12 includes, for example, a liquid crystal display or an organic electroluminescent display. The display unit 12 displays an image. Specifically, the display unit 12 displays a given display screen. The display unit 12 corresponds to an example of a "notification unit" and a "display section".

The operation unit 14 is placed around the display unit 12, for example, receives an operation of a human operator, and outputs an operation signal that corresponds to the operation of the human operator. This operation unit 14 has at least one operant 16 composed of a push button, for example, and in the present embodiment, six operants 16. The operation unit 14 having the above configuration outputs an operation signal showing whether or not the operant 16 was operated by the human operator. In the following, when, for explanation, making a distinction among the plural operants 16 of the display device 10, the plurality of operants 16, as the case may be, are described as operants 16A, 16B, 16C, 16D, 16E, and 16F, respectively.

The main control device 20 includes an ECU (Electronic Control Unit), for example, and is provided with a control unit 22, a storage unit 24, and a measurement unit 26.

The control unit 22 includes a processor such as a CPU (Central Processing Unit). The control unit 22 includes a comparison unit 221. Specifically, the processor of the control unit 22 executes a computer program stored in the storage unit 24, thereby functioning as the comparison unit 221. The storage unit 24 includes a storage device that stores various data and computer programs. This storage unit 24 stores, as various data, setting information preliminarily entered by the human operator, information on the number of drives of a starter 520 (to be described below), and information on a reference value for the number of drives of the starter 520, for example.

The control unit 22 controls the entirety of the construction machine 100, and when a state of no operation by the human operator (no operation state) elapses for a preset setting time, executes an automatic engine stop control to stop the engine 510. This setting time can be set between "5 minutes" and " 1 hour", for example. The engine 510 is described below.

In particular, the control unit 22 of the present embodiment executes the automatic engine stop control based on the number of drives and the reference value, and when the number of drives reaches the reference value, the automatic stop time is extended or the automatic engine stop control is disabled. The automatic stop time shows the time from the no operation state until the time when the engine 510 is automatically stopped by the automatic engine stop control. Hereinafter in the present specification, the automatic stop time, as the case may be, is described as "automatic stop time Ta".

Further, the control unit 22 causes the display device 10 to execute a given notification process based on the number of drives and the reference value. The notification process is described below.

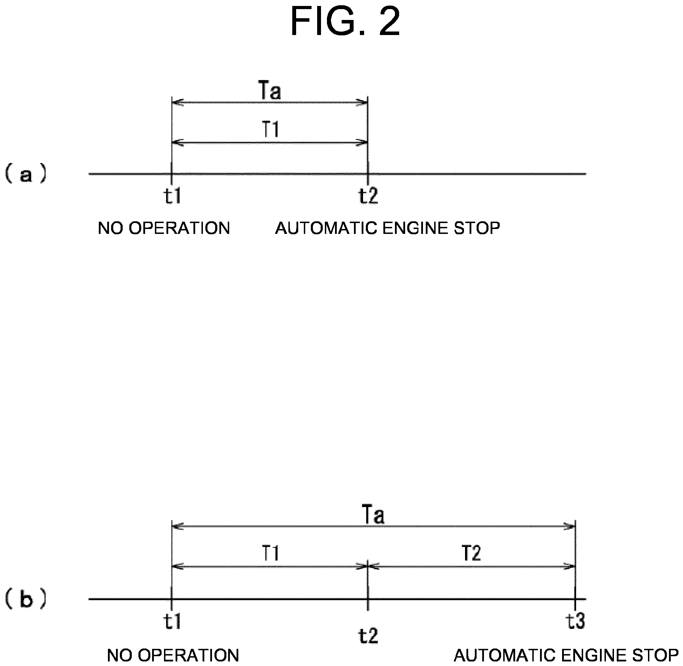

In general, compared with a passenger car, the construction machine, because the operation is so often interrupted during work, is more prone to a situation that results in the automatic engine stop. Thus, the wear of the starter in the construction machine may be larger than in the passenger car. When the starter wears out, the possibility of the engine start failure increases. When the engine does not start, the construction machine, due to its heavy weight, is more difficult to tow than the passenger car. Thus, it is preferable to execute the automatic engine stop control based on the degree of starter wear (number of drives). The automatic engine stop control is described below with reference to FIGS. 2(a) and 2(b).

The measurement unit 26 measures the number of drives of the starter 520. Specifically, the measurement unit 26, each time a key operation to the construction machine 100 is executed by the human operator, for example, measures the number of drives of the starter 520, and sends a measurement result to the storage unit 24. The measurement result is, for example, a cumulative value (number of drives). In the present embodiment, each time the starter 520 is driven once, the measurement unit 26 adds "1" to the accumulated value, for example.

The storage unit 24 stores the number of drives and the reference value. The number of drives is the number of drives of the starter 520 measured by the measurement unit 26. The reference value is, for example, a value that shows a reference for the number of drives, and is based on the specification of the starter 520's durability count.

The engine unit 500 has an engine 510 and the starter 520. The engine 510 generates power. The starter 520 starts the engine 510. In detail, the human operator makes the key operation to the construction machine 100, thereby to cause the starter 520 to start the engine 510.

The comparison unit 221 compares the number of drives with the reference value. Specifically, when the construction machine 100 is in the no operation state, for example, the comparison unit 221 compares the number of drives with the reference value. For example, in response to that the measurement unit 26 measured the number of drives of the starter 520, the comparison unit 221 may compare the number of drives with the reference value.

The display unit 12 notifies about the drive state of the starter 520 based on the number of drives and the reference value. Further, the display unit 12 can notify about the result of the comparing by the comparison unit 221. In detail, when the number of drives exceeds the reference value, the display unit 12 executes a notification process to notify that the number of drives exceeds the reference value. In more detail, the display unit 12 shows, in the notification process, that the number of drives exceeds the reference value. Further, the screen (notification screen) displayed on the display unit 12 in the notification process is described below.

Next, the automatic engine stop function of the construction machine 100 is described. FIGS. 2(a) and 2(b) illustrate the automatic engine stop function.

First, refer to FIG. 2(a), the case in which the number of drives does not exceed the reference value, i.e., a general automatic engine stop function is described.

In FIG. 2(a), a time t1 shows the time of causing the no operation state. A time t2 shows the time of the automatic engine stop.

The no operation state shows a mode in which no operation is executed on the construction machine 100. In detail, the no operation state shows, for example, that a cutoff lever that prohibits the operation of the construction machine 100 is lowered (operation enabled state), and that an operation lever for operating the construction machine 100 is not being made. Further, the no operation state includes a state in which the cutoff lever is raised (operation disabled state).

When the number of drives does not exceed the reference value, the control unit 22, after an elapse of the setting time T1, executes the automatic engine stop control. In detail, after an elapse of the setting time T1, the control unit 22 stops the engine 510. Thus, fuel consumption during the non-work can be suppressed. In FIG. 2(a), the setting time T1 is equal to the automatic stop time Ta.

Next, referring to FIG. 2(b), the case in which the number of drives exceeds the reference value, i.e., a characteristic automatic engine stop function of the construction machine is described.

In FIG. 2(b), the time t1 shows the time of causing the no operation state. The time t2 shows the time when the initial setting time T1 has elapsed from the no operation state. A time t3 shows the setting time after extension (setting time T1 + extension time T2), i.e., the time when the engine is automatically stopped.

As described above, the control unit 22 is so configured as to be capable of setting the automatic stop time Ta, and based on the result of the comparing by the comparison unit 221, changes the setting time until the automatic engine stop. In other words, the control unit 22, based on the result of the comparing by the comparison unit 221, executes a first automatic engine stop control that changes the automatic stop time Ta.

When the number of drives exceeds the reference value, the control unit 22 extends the automatic stop time Ta until the automatic engine stop (extending control of automatic stop time Ta), as shown in FIG. 2(b). In detail, the automatic stop time Ta is the time obtained by adding the setting time T1 and the extension time T2. In FIG. 2(b), the control unit 22 sets the extension time T2 to the same value as the setting time T1, for example. Further, the extension time T2 is a time that cannot be set by the human operator. Further, the extension time T2 may be made settable by the human operator. When the number of drives exceeds the reference value, i.e., when the starter 520 is worn out, extending the automatic stop time Ta until the automatic engine stop reduces the number of times the engine automatically stops, as a result, suppresses the excessive wear of the starter 520, making it possible to suppress the possibility of causing the engine start failure.

Further, the control unit 22 may change the extension time T2 according to the number of drives. For example, the control unit 22 may increase the extension time T2 as the number of drives increases. Or, the extension time T2 may be a fixed value.

The control unit 22 may have a function to control the enabling or disabling of the automatic engine stop function (control of disabling automatic engine stop function). In detail, the control unit 22, based on the result of the comparing by the comparison unit 221, may disable the automatic engine stop function. More specifically, when the number of drives exceeds the reference value, the control unit 22 may execute a second automatic engine stop control that disables the automatic engine stop function.

Further, the extending control of the automatic stop time Ta may be combined with the control of disabling the automatic engine stop function. For example, when the number of drives exceeds the reference value, if the subsequent number of drive values is within a given value, the control unit 22 may execute the extending control of the automatic stop time Ta, and if the subsequent number of drive values exceeds the given value, the control unit 22 may execute the disabling control of the automatic engine stop function. In this way, making the automatic engine stop control stepwise can eliminate the engine start failure while ensuring the human operator's convenience.

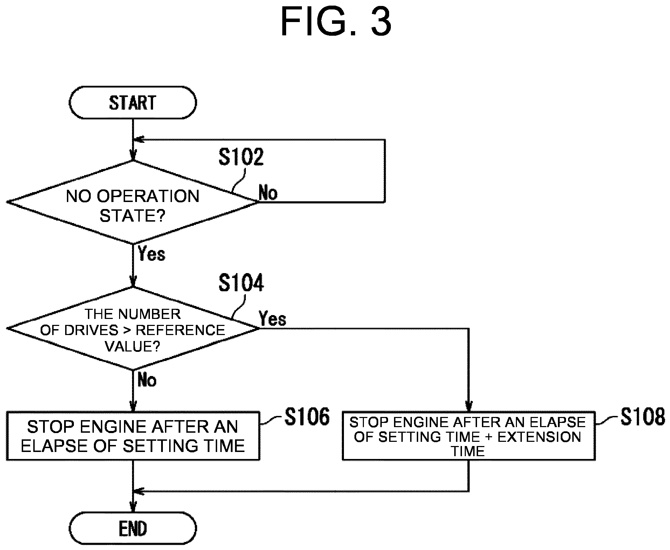

Next, referring to FIGS. 1 and 3, an automatic engine stop control process by the control unit 22 according to the first embodiment of the present invention is described. FIG. 3 is a flowchart showing an example of the automatic engine stop control process by the control unit 22 according to the first embodiment of the present invention.

Step S102: The control unit 22 determines whether or not the no operation state is made. When the control unit 22 determines that the no operation is not made (step S102: No), the process waits for a certain time period and returns to step S102 again. When the control unit 22 determines that the no operation is made (step S102: Yes), the process proceeds to step S104.

Step S104: The control unit 22 determines whether or not the number of drives exceeds the reference value. That is, the comparison unit 221 compares the number of drives with the reference value. When the control unit 22 determines that the number of drives does not exceed the reference value (step S104: No), the process proceeds to step S106. When the control unit 22 determines that the number of drives exceeds the reference value (step S104: Yes), the process proceeds to step S108.

Step S106: The control unit 22 stops the engine 510 after an elapse of the setting time T1. When this process is ended, the series of automatic engine stop control processes ends.

Step S108: The control unit 22 stops the engine 510 after an elapse of the setting time T1 + extension time T2. When this process is ended, the series of automatic engine stop control processes ends.

In the example in FIG. 3, an extending control process of the automatic stop time is executed in step S108, but otherwise, a disabling control of the automatic engine stop function may also be executed, and in addition to these processes, the notification process may be executed.

For example, the storage unit 24 stores, as reference values, a first reference value and a second reference value larger than the first reference value. The control unit 22 may execute the automatic engine stop controls different between the first reference value and the second reference value. Specifically, the control unit 22 may execute a changing process of the automatic engine stop time based on the result of the comparison with the first reference value, and may execute a disabling process of the automatic engine stop function based on the result of the comparison with the second reference value.

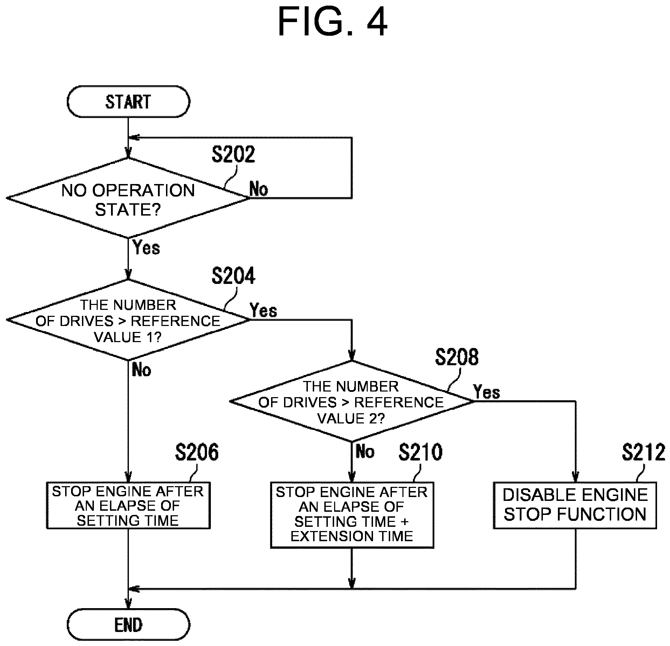

Next, referring to FIG. 4, another example of the automatic engine stop control process by the control unit 22 according to the first embodiment of the present invention is described. FIG. 4 is a flowchart showing the other example of the automatic engine stop control process by the control unit 22 according to the first embodiment of the present invention.

Step S202: The control unit 22 determines whether or not the no operation state is made. When the control unit 22 determines that the no operation state is not made (step S202: No), the process waits for a certain time period and returns to step S202 again. When the control unit 22 determines that the no operation state is made (step S202: Yes), the process proceeds to step S204.

Step S204: The control unit 22 determines whether or not the number of drives exceeds the first reference value. That is, the comparison unit 221 compares the number of drives with the first reference value. When the control unit 22 determines that the number of drives does not exceed the first reference value (step S204: No), the process proceeds to step S206. When the control unit 22 determines that the number of drives exceeds the first reference value (step S204: Yes), the process proceeds to step S208.

Step S206: The control unit 22 stops the engine 510 after an elapse of the setting time T1. When this process is ended, the series of automatic engine stop control processes ends.

Step S208: The control unit 22 determines whether or not the number of drives exceeds the second reference value. That is, the comparison unit 221 compares the number of drives with the second reference value. When the control unit 22 determines that the number of drives does not exceed the second reference value (step S208: No), the process proceeds to step S210. When the control unit 22 determines that the number of drives exceeds the second reference value (step S208: Yes), the process proceeds to step S212.

Step S210: The control unit 22 stops the engine 510 after an elapse of the setting time T1 + extension time T2. When this process is ended, the series of automatic engine stop control processes ends.

Step S212: The control unit 22 executes the disabling control of the automatic engine stop function. When this process is ended, the series of automatic engine stop control processes ends.

Further, in the example in FIG. 4, the changing process of the automatic engine stop time is executed based on the result of the comparison with the first reference value, and the disabling process of the automatic engine stop function is executed based on the result of the comparison with the second reference value, but not limited thereto. For example, the disabling process of the automatic engine stop function may be executed based on the result of the comparison with the first reference value, and the changing process of the automatic engine stop time may be executed based on the result of the comparison with the second reference value.

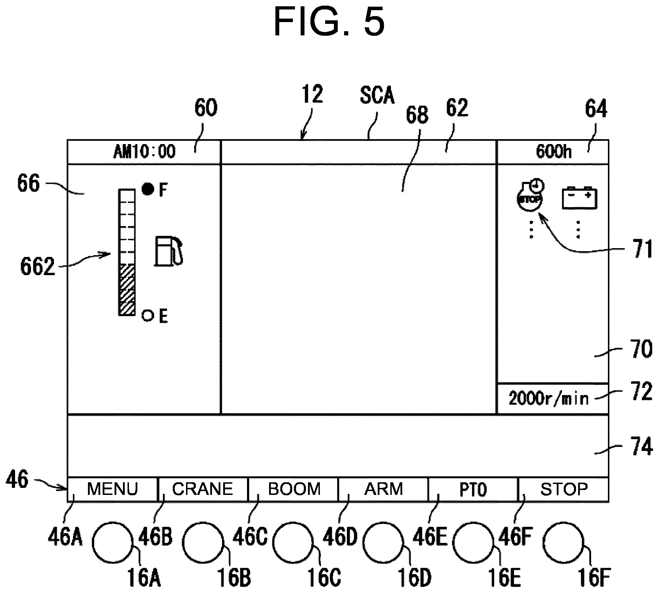

Next, the notification process by the display unit 12 is described. A display screen SCA displayed on the display unit 12 is described with reference to FIG. 5. FIG. 5 shows the display screen SCA. The display screen SCA is a screen that is normally displayed on the display unit 12 after startup of the construction machine 100.

As shown in FIG. 5, the display screen SCA includes a display area displaying various information on the construction machine 100 and an operation content display area 46.

The display area for displaying various information includes a time display area 60 placed on the left side in the upper step of the screen, an error display area 62 placed in the middle in the upper step of the screen, an operation value display area 64 placed on the right side in the upper step of the screen, a fuel information display area 66 placed on the left side in the middle step of the screen, a camera image display area 68 placed in the middle of the screen, an icon display area 70 and a revolution speed display area 72 which are placed on the right side in the middle step of the screen, an option content information display area 74 placed in the lower step of the screen, and the operation content display area 46.

The operation content display area 46 is a display area that displays the operation content operable by the human operator, and includes, for example, a plurality of selected units 46A to 46F placed on one straight line. These selected units 46A to 46F are displayed in correspondence with the above operants 16A to 16F of the operation unit 14, and operating the operants 16A to 16F that corresponds to the selected units 46A to 46F switches the display content. Further, each of the plural selected units 46A to 46F is an object, for example.

The operation value display area 64 displays an operation value showing an operation performance of the construction machine 100. In the present embodiment, the operation value is shown as an hour.

The fuel information display area 66 is a display area showing the state of a remaining fuel oil, and displays, for example, a graphic showing that it is the fuel information display area 66 and a gauge 662 showing the remaining fuel amount by a columnar graph.

When the number of drives exceeds the reference value, the display unit 12, using a message, shows that the number of drives has exceeded the reference value. In detail, when the number of drives exceeded the reference value, the display unit 12 displays the message image in the error display area 62. The message image is an image showing "The number of drives of starter is exceeding.", for example.

Further, the message image may be displayed in the camera image display area 68 other than the error display area 62. Displaying the message image in the camera image display area 68, which is widely distributed in the center of the screen makes it possible to give high degree of caution to the human operator.

Further, when the number of drives exceeds the reference value, the display unit 12 may show, with the message, that an automatic operation stop function is disabled. In detail, when the automatic operation stop function is disabled in the case of the number of drives exceeding the reference value, the display unit 12 displays the message image in the error display area 62. The message image is an image showing "The automatic engine stop function is disabled.", for example. Thus, the display unit 12, simultaneously with the disabling of the automatic engine stop function, notifies that the automatic engine stop function is disabled.

Further, the display unit 12, when the number of drives exceeds the reference value, may show, with the message, that the time period until the automatic engine stop is extended. In detail, when the period until the automatic engine stop is extended in the case of the number of drives exceeding the reference value, the display unit 12 displays the message image in the error display area 62. The message image is an image showing "Time period until the automatic engine stop is extended.", for example. In this way, the display unit 12, simultaneously with the changing of the setting time, notifies that the setting time is changed.

Further, when the number of drives has exceeded the reference value, the display unit 12 may show, using an icon 71, that the number of drives has exceeded the reference value. In detail, when the number of drives exceeds the reference value, the display unit 12 may light or blink the icon 71.

Further, when the number of drives has exceeded the reference value, the display unit 12, as a control process, may display a setting screen that allows selection of either changing the automatic engine stop period or disabling the automatic engine stop function.

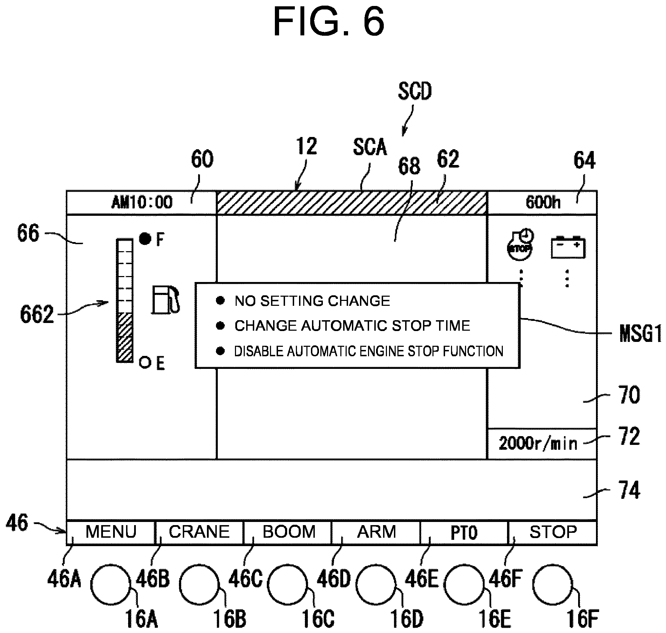

Then, a setting screen SCD displayed on the display unit 12 is described with reference to FIG. 6. FIG. 6 shows the setting screen SCD. The setting screen SCD is a screen on which a message image MSG1 is superimposed on the display screen SCA. The message image MSG1 is an image showing multiple messages such as "No change in setting", "Change automatic stop time" and "Disable automatic engine stop function". When the human operator selects any one of the multiple messages, the control unit 22 executes the control process that corresponds to the selected message.

That is, when the number of drives exceeds the reference value, the control unit 22 causes the display unit 12 to display the setting screen SCD which allows selection of the control process, and, depending on the setting operation, executes either changing of the automatic engine stop period or disabling of the automatic engine stop function.

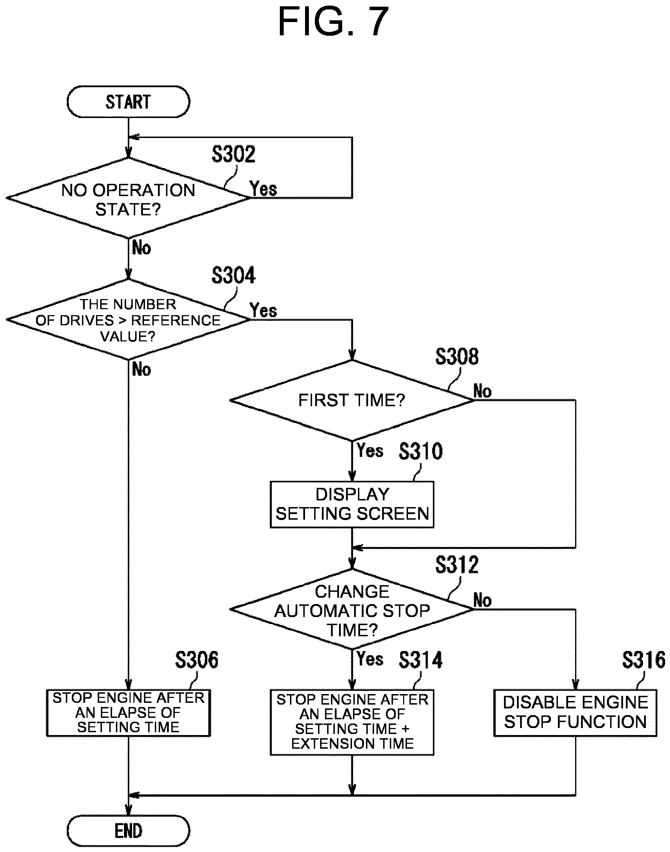

Next, referring to FIG. 7, an example of the automatic engine stop control process that accords to the setting operation by the control unit 22 according to the first embodiment of the present invention is described. FIG. 7 is a flowchart showing an example of the automatic engine stop control process that accords to the setting operation by the control unit 22 according to the first embodiment of the present invention.

Step S302: The control unit 22 determines whether or not the no operation state is made. When the control unit 22 determines that the no operation state is not made (step S302: No), the process waits for a certain time period and returns to step S302 again. When the control unit 22 determines that the no operation state is made (step S302: Yes), the process proceeds to step S304.

Step S304: The control unit 22 determines whether or not the number of drives exceeds the reference value. That is, the comparison unit 221 compares the number of drives with the reference value. When the control unit 22 determines that the number of drives does not exceed the reference value (step S304: No), the process proceeds to step S306. When the control unit 22 determines that the number of drives exceeds the reference value (step S304: Yes), the process proceeds to step S308.

Step S306: The control unit 22 stops the engine 510 after an elapse of the setting time T1. When this process is ended, the series of automatic engine stop control processes ends.

Step S308: The control unit 22 determines the number of times the number of drives exceeds the reference value. When the control unit 22 determines that the number of times the number of drives exceeds the reference value is one time (step S308: Yes), the process proceeds to step S310. When the control unit 22 determines that the number of times the number of drives exceeds the reference value is two or more (step S208: No), the process proceeds to step S312.

Step S310: The display unit 12 displays the setting screen SCD including two messages. The process proceeds to step S312.

Step S312: The control unit 22 executes the automatic engine stop control that corresponds to any one of the two messages selected by the human operator. When the human operator selects "Change automatic stop time" (step S312: Yes), the process proceeds to step S314. When the human operator selects "Change automatic stop time" (step S312: No), the process proceeds to step S316.

Step S314: The control unit 22 stops the engine 510 after an elapse of the setting time T1 + extension time T2. When this process is ended, the series of automatic engine stop control processes ends.

Step S316: The control unit 22 executes the disabling control of the automatic engine stop function. When this process is ended, the series of automatic engine stop control processes ends.

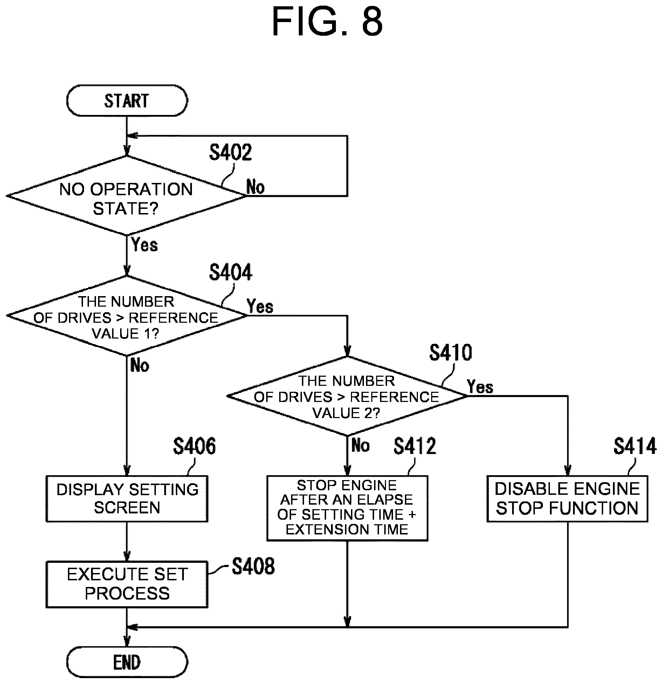

Next, with reference to FIG. 8, another example of the automatic engine stop control process that accords to the setting operation by the control unit 22 according to the first embodiment of the present invention is described. FIG. 8 is a flowchart showing another example of the automatic engine stop control process that accords to the setting operation by the control unit 22 according to the first embodiment of the present invention.

Step S402: The control unit 22 determines whether or not the no operation state is made. When the control unit 22 determines that the no operation state is not made (step S402: No), the process waits for a certain time period and returns to step S402 again. When the control unit 22 determines that the no operation state is made (step S402: Yes), the process proceeds to step S404.

Step S404: The control unit 22 determines whether or not the number of drives exceeds the first reference value. That is, the comparison unit 221 compares the number of drives with the first reference value. When the control unit 22 determines that the number of drives does not exceed the first reference value (step S404: No), the process proceeds to step S406. When the control unit 22 determines that the number of drives exceeds the first reference value (step S404: Yes), the process proceeds to step S410.

Step S406: The display unit 12 displays the setting screen SCD including two messages. The process proceeds to step S408.

Step S408: The control unit 22 executes the automatic engine stop control that corresponds to any one of the two messages selected by the human operator. When the human operator selects "Change automatic stop time", the control unit 22 stops the engine 510 after an elapse of the setting time T1 + extension time T2. When this process is ended, the series of automatic engine stop control processes ends. Meanwhile, when the human operator selects "Disable automatic engine stop function", the control unit 22 executes the disabling control of the automatic engine stop function. When this process is ended, the series of automatic engine stop control processes ends.

Step S410: The control unit 22 determines whether or not the number of drives exceeds the second reference value. That is, the comparison unit 221 compares the number of drives with the second reference value. When the control unit 22 determines that the number of drives does not exceed the second reference value (step S410: No), the process proceeds to step S412. When the control unit 22 determines that the number of drives exceeds the second reference value (step S410: Yes), the process proceeds to step S414.

Step S412: The control unit 22 stops the engine 510 after an elapse of the setting time T1 + extension time T2. When this process is ended, the series of automatic engine stop control processes ends.

Step S414: The control unit 22 executes the disabling control of the automatic engine stop function. When this process is ended, the series of automatic engine stop control processes ends.

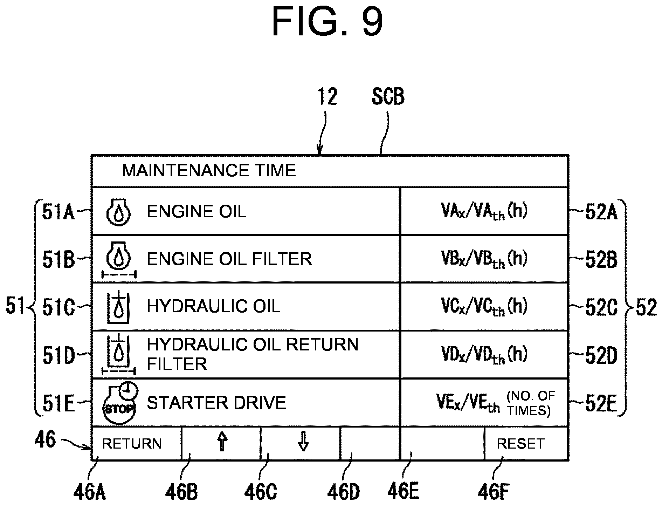

Next, a display screen SCB displayed on the display unit 12 is described with reference to FIG. 9. FIG. 9 shows the display screen SCB. The display screen SCB is a maintenance screen displayed on the display unit 12 by the human operator operating the display device 10, and displays various information on the construction machine 100.

As shown in FIG. 9, the display screen SCB includes an item display area 51 and an item state display area 52.

The item display area 51 displays an image showing an item. The item display area 51 includes a first item display area 51A, a second item display area 51B, a third item display area 51C, a fourth item display area 51D, and a fifth item display area 51E.

The first item display area 51A shows "Engine Oil". The second item display area 51B shows "Engine Oil Filter". The third item display area 51C shows "Hydraulic oil. The fourth item display area 51D shows "Hydraulic Oil Return Filter". The fifth item display area 51E shows "Starter".

The item state display area 52 displays an image showing the state of the item. The item state display area 52 includes a first item state display area 52A, a second item state display area 52B, a third item state display area 52C, a fourth item state display area 52D, and a fifth item state display area 52E.

The first item state display area 52A, the second item state display area 52B, the third item state display area 52C, the fourth item state display area 52D, and the fifth item state display area 52E correspond to the first item display area 51A, the second item display area 51B, the third item display area 51C, the fourth item display area 51D, and the fifth item display area 51E, respectively. For example, "VEₓ (drives)/VEu, (drives)" is displayed in the fifth item state display area 52E, corresponding to "Starter Drive" displayed in the fifth item display area 51E. Thus, the display unit 12 has the display screen SCB that can show the number of drives of the starter 520 measured by the measurement unit 26. On the display screen SCB, the display unit 12 shows, side by side, at least the current number of drives of the starter 520 and/or the reference value. Here, the number of drives is VEₓ (drives) and the reference value is VEₜₕ (drives).

As described above with reference to FIGS. 1 through 9, the display unit 12 (notification unit) notifies about the drive state of the starter 520 based on the number of drives and the reference value. This allows the human operator to check the drive state of the starter 520. Thus, the starter 520 can be checked for the wear condition. As a result, the possibility of the engine start failure due to excessive wear of the starter 520 can be suppressed.

### (Second Embodiment)

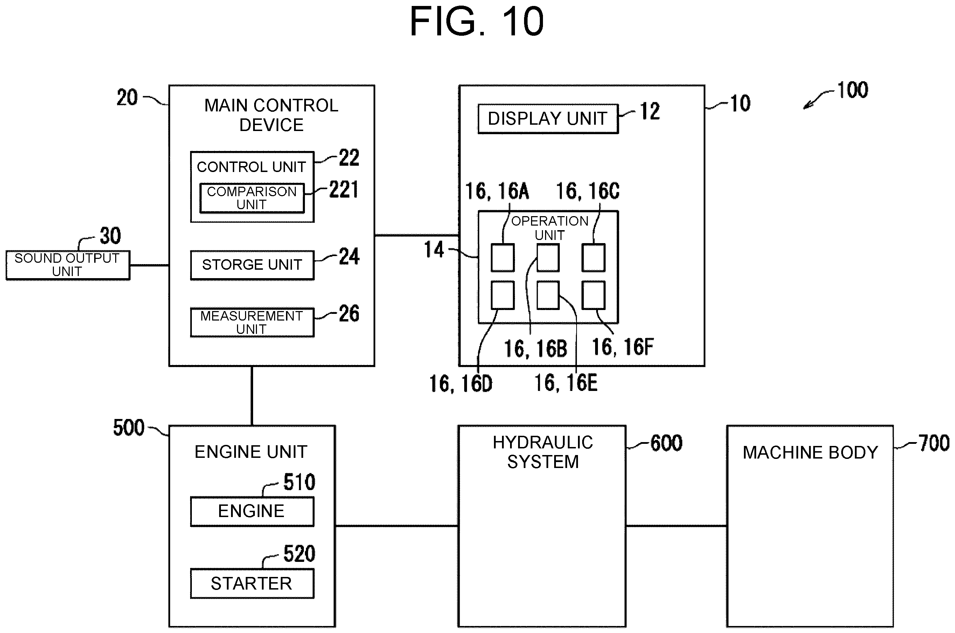

Next, referring to FIG. 10, the construction machine 100 according to a second embodiment of the present invention is described in detail. FIG. 10 is a block diagram showing the construction machine 100 according to the second embodiment of the present invention. The construction machine 100 according to the second embodiment, excluding having a sound output unit 30, has the same configuration as the construction machine 100 according to the first embodiment; thus, description of duplicated parts is omitted.

As shown in FIG. 10, the construction machine 100 is provided with the display device 10, the main control device 20, the engine unit 500, the hydraulic system 600, and the machine body 700, as well as the sound output unit 30. The sound output unit 30 corresponds to an example of the "notification unit" and the "notification section.

The sound output unit 30, in the notification process, issues an alarm that the number of drives has exceeded the reference value. The sound output unit 30 is, for example, a speaker or a buzzer. When the number of drives exceeds the reference value, the sound output unit 30 may sound the buzzer, for example. Or, when the number of drives exceeds the reference value, the sound output unit 30 may emit a voice indicating an announcement.

As described with reference to FIG. 10, the sound output unit 30 (notification section), in the notification process, issues the alarm that the number of drives exceeds the reference value. Thus, the starter 520 can be checked for the wear condition. As a result, the possibility of the engine start failure due to excessive wear of the starter 520 can be suppressed.

Referring to FIGS. 1 to 10, the embodiments of the present invention have been described. However, the present invention is not limited to the embodiments described above, and may be embodied in various modes within a range without departing from its gist. The drawings are schematically illustrated with each component as a main subject in order to facilitate understanding, and the thickness, length, number, and the like of each of the illustrated component elements may be different from actual ones due to convenience of the drawings. Further, the material, shape, dimension and the like of each of the component elements shown in the above embodiments are each one example are not particularly limited, and may be variously modified within a scope not substantially departing from the effect of the present invention.

### DESCRIPTION OF REFERENCE NUMERALS

12 display unit (notification unit, notification section)
22 control unit
24 storage unit
26 measurement unit
30 sound output unit (notification unit, notification section)
71 icon
100 construction machine
221 comparison unit
520 starter
SCD setting screen

## Claims

1. A construction machine comprising:
a measurement unit that measures the number of drives of a starter;
a storage unit that stores the number of drives measured by the measurement unit, and a reference value; and
a notification unit that executes a notification process to notify about a drive state of the starter based on the number of drives and on the reference value.

2. The construction machine as claimed in claim 1, further comprising:
a comparison unit that compares the number of drives with the reference value, wherein
the notification unit, in the notification process, notifies about a result of the comparing by the comparison unit.

3. The construction machine as claimed in claim 2, wherein
when the number of drives exceeds the reference value as a result of the comparing by the comparison unit, the notification unit, in the notification process, notifies that the number of drives exceeds the reference value.

4. The construction machine as claimed in claim 3, wherein
the notification unit has a display section, and
the display section, in the notification process, displays that the number of drives exceeds the reference value.

5. The construction machine as claimed in claim 4, wherein
the display section, using a message, displays that the number of drives has exceeded the reference value.

6. The construction machine as claimed in claim 4 or claim 5, wherein
the display section, using an icon, displays that the number of drives exceeds the reference value.

7. The construction machine as claimed in claim 3, wherein
the notification unit has a notification section, and
the notification section, in the notification process, issues an alarm that the number of drives exceeds the reference value.

8. The construction machine as claimed in any one of claims 2 to 7, further comprising:
a control unit that executes an automatic engine stop control.

9. The construction machine as claimed in claim 8, wherein
the control unit is so configured as to be capable of setting an automatic stop time that shows a time until the automatic engine stop, and
the control unit, based on the result of the comparing by the comparison unit, executes a first automatic engine stop control that changes the automatic stop time.

10. The construction machine as claimed in claim 9, wherein
the notification unit, simultaneously with the changing of the automatic stop time, notifies that the automatic stop time is changed.

11. The construction machine as claimed in claim 8, wherein
the control unit has a function to control enabling or disabling of an automatic engine stop function, and
the control unit, based on the result of the comparing by the comparison unit, executes a second automatic engine stop control that disables the automatic engine stop function.

12. The construction machine as claimed in claim 11, wherein
the notification unit, simultaneously with the disabling of the automatic engine stop function, notifies that the automatic engine stop function is disabled.

13. The construction machine as claimed in claim 11 or claim 12, wherein
the notification unit has a display section, and
the display section, based on the result of the comparing by the comparison unit, displays a setting screen capable of setting content of the automatic engine stop control.

14. The construction machine as claimed in claim 11 or claim 12, wherein
the storage unit stores, as the reference values, a first reference value and a second reference value larger than the first reference value, and
the control unit
executes the first automatic engine stop control based on the number of drives and any one of the first reference value and the second reference value, and
executes the second automatic engine stop control based on the number of drives and the other of the first reference value and the second reference value.

15. A construction machine comprising:
a measurement unit that measures the number of drives of a starter;
a storage unit that stores the number of drives measured by the measurement unit, and a reference value; and
a control unit that executes an automatic engine stop control based on the number of drives and on the reference value.

16. The construction machine as claimed in claim 15, wherein
the control unit is so configured as to be capable of setting an automatic stop time that shows a time until the automatic engine stop, and
the control unit, based on the number of drives and the reference value, executes a first automatic engine stop control that changes the automatic stop time.

17. The construction machine as claimed in claim 15, wherein
the control unit has a function to control enabling or disabling of an automatic engine stop function, and
the control unit, based on the number of drives and the reference value, executes a second automatic engine stop control that disables the automatic engine stop function.

18. The construction machine as claimed in claim 17, wherein
the storage unit stores, as the reference values, a first reference value and a second reference value larger than the first reference value, and
the control unit
executes the first automatic engine stop control based the number of drives and any one of the first reference value and the second reference value, and
executes the second automatic engine stop control based on the number of drives and the other of the first reference value and the second reference value.
